Europäisches Patentamt

European Patent Office

Office européen des brevets

(19)

(11) EP 0 558 396 B1

(12) **FASCICULE DE BREVET EUROPEEN**

(45) Date de publication et mention
de la délivrance du brevet:
**16.06.1999 Bulletin 1999/24**

(51) Int. Cl.$^6$: **B32B 17/10**, C03C 27/12

(21) Numéro de dépôt: **93400455.7**

(22) Date de dépôt: **23.02.1993**

(54) **Vitrage pare-flamme**

Feuerabwehrscheibe

Flame-retarder glazing unit

(84) Etats contractants désignés:
**AT BE CH DE DK ES FR GB GR IT LI LU NL PT SE**

(30) Priorité: **25.02.1992 FR 9202138**

(43) Date de publication de la demande:
**01.09.1993 Bulletin 1993/35**

(73) Titulaire: **SAINT-GOBAIN VITRAGE
92400 Courbevoie (FR)**

(72) Inventeurs:
• **Demars, Yves
F-60600 Agnetz (FR)**
• **Acloque, Jean-Pierre
F-95840 Villiers-Adam (FR)**

(74) Mandataire: **Muller, René et al
SAINT-GOBAIN RECHERCHE,
39, quai Lucien Lefranc-BP 135
93303 Aubervilliers Cédex (FR)**

(56) Documents cités:
**GB-A- 950 209**        **US-A- 4 071 649**

Remarques:
Le dossier contient des informations techniques
présentées postérieurement au dépôt de la
demande et ne figurant pas dans le présent
fascicule.

## Description

L'invention concerne le domaine des vitrages anti-feu et plus particulièrement ceux destinés à empêcher le passage des flammes et des gaz (pare-flammes ou vitrages G selon DIN).

Les vitrages pare-flamme, dits vitrages G selon la norme DIN 4102, sont de deux natures, ou bien le verre plat a une composition spéciale telle que celle des borosilicates, ou bien il s'agit de verre flotté de la composition silico-sodo-calcique habituelle et alors, ou bien il a subi un traitement spécial, ou bien il est dans une configuration, association de vitrages, particulière ou bien encore, il est monté dans la paroi opaque qui l'entoure, de manière très spéciale. Le plus souvent les vitrages pare-flamme à base de float glass combinent les caractéristiques précédentes.

L'invention concerne des vitrages pare-flamme à base de verre silico-sodo-calcique et propose d'améliorer le fonctionnement de tels vitrages.

Lorsqu'un vitrage pare-flamme est exposé à un incendie son rôle consiste à demeurer à sa place pendant une durée déterminée (30, 60 ou 90 minutes) et à empêcher le passage des fumées et des gaz chauds. A la différence des produits coupe-feu (vitrages F de la DIN 4102) aucune limite de température ne lui est imposée.

Le verre normal étant un produit fragile et présentant une fusion pâteuse, deux difficultés doivent être surmontées par les produits pare-flamme : il faut éviter la casse du verre au début de l'incendie ou de l'essai normalisé au feu et d'autre part il faut éviter qu'à la fin, le verre ne s'effondre, qu'il ne coule. Le but que se donne l'invention est d'améliorer le comportement du verre silico-sodo-calcique de ces deux points de vue.

Les vitrages pare-flamme à base de verre normal sont pratiquement toujours faits d'un float glass ayant subi une trempe thermique (ou éventuellement chimique), les plaques sont le plus souvent ou bien associées en vitrages isolants ou bien associées en vitrages feuilletés ou, même, combinent les deux systèmes. Des vitrages du premier type sont décrits par exemple dans le brevet français FR 2 366 434 ou dans les brevets américains US 4 164 107 ou US 4 164 108; ils sont constitués de plaques de float glass ayant subi une trempe thermique associées deux à deux à l'aide d'un profilé intercalaire collé et leur technique de montage dans le châssis qui les supporte est telle que lors de l'exposition à des flammes, le bord de la plaque du côté du feu est exposé instantanément ou, en tous cas, à bref délai, au rayonnement thermique et aux flammes elles-mêmes, ce qui permet de limiter les contraintes thermiques qui s'établissent habituellement dans une plaque lorsqu'elle est davantage chauffée au centre que sur ses bords. L'association d'une trempe thermique de bonne qualité et du montage en question permet à un tel vitrage de rester en place suffisamment longtemps pour atteindre la classe G 30 (pare-flamme 1/2 heure).

C'est-à-dire que sur un four normalisé, dont l'élévation de température répond à la loi :

$$T - T_o = 345 \log (8t+1)$$

où T est la température en Kelvin et t le temps en minutes, $T_o$ étant la température devant le vitrage au temps t = o, une des plaques au moins reste en place plus de 30 minutes.

Pour qu'un vitrage du type précédent fonctionne, il faut impérativement que le gradient thermique entre le centre du vitrage, chauffé par les flammes (conduction-convexion) et par le rayonnement du four et le bord, qui s'échauffe moins au début car il est en contact avec la structure, reste limité en tout point. En effet, un tel gradient se matérialise en une contrainte d'extension au bord qui, si elle est supérieure à la précontrainte de trempe, va rapidement entraîner la casse explosive du verre trempé. Il est donc important de limiter ce gradient, c'est ce que fait le vitrage de l'invention.

L'invention s'applique également aux vitrages pare-flamme de la deuxième famille, ceux constitués par l'association de plaques de float glass à l'aide d'un film plastique intercalaire pour constituer un ensemble feuilleté. En général, ici aussi, les plaques de verre sont trempées thermiquement. Une telle technique est décrite par exemple dans le brevet européen EP 219 801 B. Ici aussi, on tient à imiter au maximum l'échauffement du centre de la plaque de manière à imiter le gradient thermique centre-bords et donc la contrainte au bord. On limite ainsi le risque de voir se produire une casse explosive du vitrage. L'invention propose une solution pour diminuer ce risque en diminuant le gradient thermique concerné.

L'invention propose pour réaliser un vitrage pare-flamme d'utiliser un verre silico-sodo-calcique flotté dont la composition est telle que sa transmission de l'énergie solaire selon la norme ISO 9050 est supérieure à 89 % en épaisseur 6 mm, grâce à une proportion pondérale d'oxyde ferreux dans sa composition qui n'est pas supérieure à 200 ppm de $Fe_2O_3$ et à une proportion pondérale de l'ensemble des autres oxydes colorants qui est inférieure à 100 ppm.

L'invention a ainsi pour objet un vitrage pare-flamme comprenant un élément vitré à base de verre silico-sodo-calcique flotté, monté dans un cadre ou châssis, caractérisé en ce que la composition du verre est telle que ci-dessus.

L'invention a également pour objet un vitrage pare-flamme comprenant un élément vitré feuilleté constitué par l'association de plaques de verre silico-sodo-calcique flotté à l'aide d'au moins un film plastique intercalaire, caractérisé en ce que la composition du verre de chacune des plaques est telle que ci-dessus.

Dans un mode de réalisation, le vitrage pare-flamme est constitué de deux plaques de 10 mm de la composition précédente, trempées et associées par un film de polyvinylbutyral, les chants des verres ont subi un poli fin et la contrainte de compression superficielle est supérieure à 12 000 hectopascals et de préférence de 14 000 hectopascals. De préférence, le bord des plaques de verre n'est recouvert par des parcloses que sur une hauteur qui ne dépasse pas 15 mm.

Dans un autre mode de réalisation du vitrage pare-flamme de l'invention, l'élément vitré qui a la composition précédente est constitué d'au moins trois plaques de verre individuelles d'une épaisseur d'au moins 3 mm chacune; elles sont disposées parallèlement l'une à l'autre et réunies en un vitrage feuilleté par des couches d'adhésif transparent en une matière thermoplastique comme le polyvinylbutyral, au moins les deux plaques de verre flotté extérieures du vitrage feuilleté ont subi une trempe thermique.

Par ailleurs, quel que soit le mode de réalisation, le jeu total à froid entre le vitrage et la structure du bâtiment ou le cadre lié à cette structure dans la direction d'une dimension du vitrage est de préférence de l'ordre du centième de celle-ci.

L'invention a d'ailleurs encore pour objet un procédé pour équiper un bâtiment d'un vitrage pare-flamme, caractérisé en ce que l'on fabrique un élément vitré à base d'un verre silico-sodo-calcique flotté dont la composition est telle que ci-dessus, et en ce que l'on monte l'élément vitré dans la structure du bâtiment, éventuellement dans un cadre lié à cette structure, le jeu total à froid entre l'élément vitré et la structure ou le cadre, dans la direction d'une dimension du vitrage, étant de l'ordre du centième de celle-ci.

Les types de vitrages pare-flamme précédents sont présentés à titre d'exemple mais l'invention concerne tous les pare-flammes à base de verre silico-sodo-calcique y compris les plus simples, ceux qui ne comportent qu'un seul verre trempé.

La solution que préconise l'invention permet ainsi, en diminuant l'échauffement du vitrage par absorption du rayonnement provenant du four, de limiter au début, le gradient entre le centre et le bord, qui est toujours en retard d'échauffement par rapport à lui, et donc de limiter également le risque de voir la plaque de verre casser au cours de la première phase de l'incendie ou de l'essai normalisé.

La description et les figures qui suivent permettront de comprendre le fonctionnement de l'invention.

Parmi les figures,

la figure 1 montre le spectre d'émission d'un réfractaire siliceux à 920°C,
la figure 2 représente la différence d'absorption d'un vitrage pareflamme selon l'invention et d'un verre flotté normal.

Les verres techniques habituels produits par la technique de flottage sur un bain d'étain ont, lorsqu'ils ne sont pas colorés, une composition qui comporte essentiellement de la silice et des oxydes en plus faible quantité. Les compositions pondérales sont en général à l'intérieur des fourchettes figurant dans le tableau :

| SiO$_2$ | 70 à 73 % |
|---|---|
| Na$_2$O | 13 à 16 % |
| CaO | 8 à 13 % |
| MgO | 0 à 5 % |
| Al$_2$O$_3$ | 0,2 à 2 % |

Pour des raisons de matières premières disponibles et de thermique des fours, la composition habituelle comporte en plus, en général, une proportion d'oxyde de fer comprise entre 0,5 et 2,5 % de Fe$_2$O$_3$. Ce fer donne au verre plat, selon son degré d'oxydation, une teinte verte qui va du bleuâtre au jaunâtre.

Le verre utilisé selon l'invention, à la différence des verres flottés habituels, ne comporte pratiquement pas de fer dans ses matières premières. Il a par exemple une composition pondérale :

| SiO$_2$ | 72 % |
|---|---|
| Na$_2$O | 13 % |
| CaO | 9 % |
| MgO | 4 % |
| Al$_2$O$_3$ | <1 % |
| Fe$_2$O$_3$ | <2OO ppm (parties par million) |

Un point important de la réalisation d'un tel verre consiste à éviter que d'autres oxydes colorants ne viennent polluer la composition, en particulier ceux qui produisent une absorption dans l'infra-rouge tels que ceux de cobalt ou de chrome, leur proportion pondérale globale dans la composition doit être inférieure à 100 ppm. En revanche des oxydes tels que TiO$_2$ ou MnO n'ont que peu d'influence sur l'absorption du verre dans le domaine de longueurs d'ondes intéressant pour l'invention.

Une telle composition avec une teneur en fer faible est compatible avec la technique de production du float-glass. Les seules précautions à prendre par l'homme du métier concernent la fusion du verre car la faible absorption du rayonnement émis par les flammes des brûleurs et la voûte du four modifie les courants de convexion et entraîne un échauffement direct de la sole du four.

Le verre de l'invention, pratiquement exempt d'ions colorants, spécialement de fer, a une transmission lumineuse et énergétique très élevée, c'est ainsi que, dans une épaisseur de 6 mm sa transmission lumineuse est de 91 % (float clair habituel : 89,9 %) et sa transmission de l'énergie solaire selon la norme ISO 9050, de 90 % (float clair : 83 %).

Lorsqu'un vitrage pare-flamme subit un échauffement lors d'un essai au feu, celui-ci se produit de deux manières, d'une part les gaz chauds des flammes qui lèchent la surface, échauffent la plaque par conduction, l'élévation de température se propageant progressivement de la surface dans la masse du produit, d'autre part le rayonnement des flammes et des parois du four est absorbé directement dans l'épaisseur de la plaque. C'est ce second phénomène qui est sensiblement moins important avec le verre de l'invention. Celui-ci absorbe beaucoup moins le rayonnement indirect issu des parois du local (ou de celles du four s'il s'agit d'un essai normalisé).

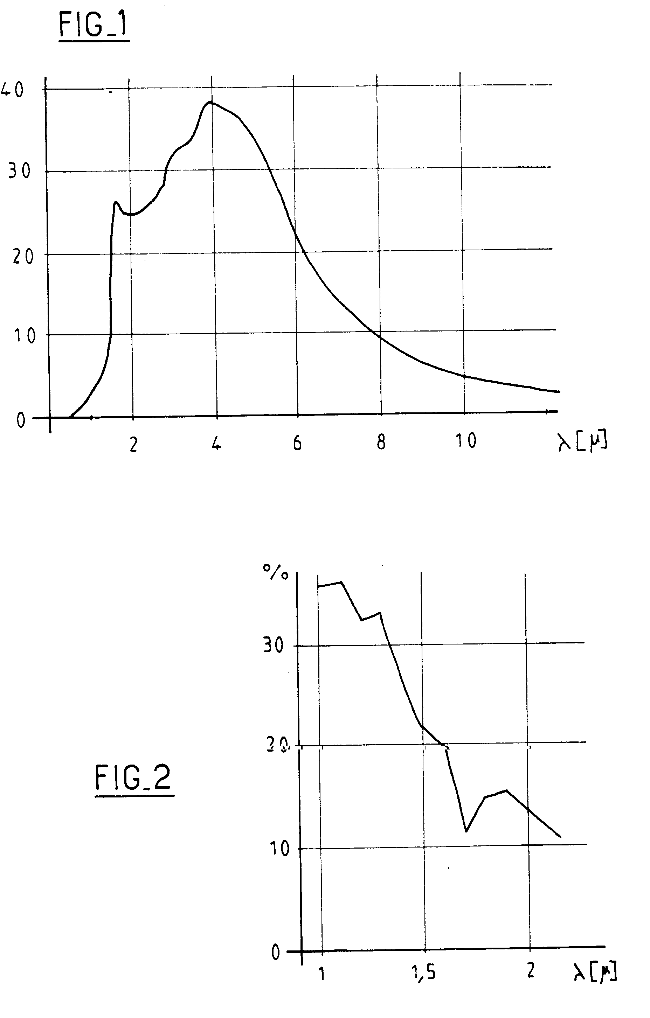

Le rayonnement émis par une paroi chaude dépend de sa nature et de la température. Sur la figure 1 on a représenté en unités relatives le spectre du rayonnement émis par une paroi en réfractaire siliceux telle que celle qu'on utilise dans les fours d'essai, lorsqu'elle est chauffée à une température de 920°C c'est-à-dire dans le cas d'un essai au feu normalisé, après une durée d'environ 50 minutes. Cette courbe s'écarte du spectre d'émission du corps noir à la même température à cause de la caractéristique d'émission du réfractaire concerné.

Le verre de l'invention a permis de réaliser un vitrage pare-flamme feuilleté fait de l'association de deux verres trempés particuliers : ils sont identiques, d'une épaisseur de 10 mm, leurs bords ont subi un traitement spécial puisqu'après avoir été découpés et rodés, ils ont obtenu une finition de surface fine, d'une rugosité inférieure à 5 μm.

Ces verres ont subi un traitement de trempe thermique qui leur a donné une contrainte de compression de surface élevée, supérieure à 12 000 hectopascals et de préférence égale à 14 000 hectopascals. Ils sont associés à l'aide d'un film de polyvinylbutyral plus mince (0,76 mm) qu'il n'est d'usage avec des verres trempés.

Dans cette association, malgré la grande épaisseur globale du verre, le vitrage reste très transparent (transmission lumineuse supérieure à 89 %) alors qu'un ensemble identique constitué de verre flotté traditionnel possède une teinte verte qui apparaît nettement lorsqu'on observe la tranche du verre. Sa transmission est sensiblement plus faible (transmission lumineuse T = 85,5 %).

Ces différences observables dans le domaine visible sont encore beaucoup plus accentuées dans l'infra-rouge, dans le domaine des longueurs d'ondes de la figure 1. On a porté sur la figure 2 la différence l'absorption des deux échantillons précédents pour la partie du domaine dans l'infra-rouge proche. On voit immédiatement combien l'énergie absorbée est plus importante dans le cas du float glass traditionnel.

Lors des essais au feu avec le vitrage extra-clair qu'on vient de décrire, on a effectivement constaté une diminution sensible du gradient thermique entre le centre du vitrage et ses bords, ce qui retardé la casse du premier verre, celui qui est exposé à la chaleur. Une diminution de gradient comparable sur le second verre, celui qui reste en place sans casser lors d'un essai au feu, diminue encore le risque de le voir se briser à cause d'une très forte hétérogénéité de chauffe lors d'un incendie réel.

Mais l'avantage qui a été observé sur l'ensemble feuilleté-trempé de deux fois 10 mm serait bien entendu comparable avec le feuilleté triple décrit dans le brevet européen EP 219 801 B et d'une manière générale, avec tous les vitrages pare-flamme à base de verre flotté standard : lorsque la casse du verre trempé se produit lors de l'essai au feu, c'est plus tard et si l'on cherche à l'éviter, les risques d'un mauvais fonctionnement du système diminuent.

Mais de manière surprenante, lors des essais, un autre phénomène est apparu. On a constaté que l'effondrement du vitrage( au moment où le verre qui "coule" s'extrait de la feuillure haute et glisse vers le bas en libérant l'ouverture) se produisait plus tard, à un moment où la température du four était supérieure de plus d'une dizaine de degrés.

Cet effet inattendu, qui est la conséquence d'une plus grande viscosité du verre de l'invention par rapport au verre flotté traditionnel présente ainsi un avantage supplémentaire puisqu'il permet avec des combinaisons pare-flamme à base de verre silico-sodo-calcique qui, normalement, avec le float glass traditionnel, ont des durées de tenue au feu supérieures à 50 minutes, comme celles du premier mode de réalisation de l'invention, de les dépasser sensiblement pour atteindre la tenue d'une heure, ce qui ouvre des marchés nouveaux à ce type de produits beaucoup moins chers et plus esthétiques que les pare-flammes à base de borosilicates dont la qualité optique est souvent médiocre.

**Revendications**

1. Vitrage pare-flamme comprenant un élément vitré à base de verre silico-sodo-calcique flotté, monté dans un cadre ou châssis, **caractérisé en ce que** la composition du verre est telle que sa transmission de l'énergie solaire selon la norme ISO 9050 est supérieure à 89 % en épaisseur 6 mm, la proportion pondérale d'oxyde ferreux dans la composition n'étant pas supérieure à 200 ppm de $Fe_2O_3$, et la proportion pondérale de l'ensemble des autres oxydes colorants étant inférieure à 100 ppm.

2. Vitrage pare-flamme comprenant un élément vitré feuilleté constitué par l'association de plaques de verre silico-sodo-calcique flotté à l'aide d'au moins un film plastique intercalaire, **caractérisé en ce que** la composition du verre de chacune des plaques est telle que sa transmission de l'énergie solaire selon la norme ISO 9050 est supérieure à 89 % en épaisseur 6 mm, la proportion pondérale d'oxyde ferreux dans la composition n'étant pas supérieure à 200 ppm de $Fe_2O_3$, et la proportion de l'ensemble des autres oxydes colorants étant inférieure à 100 ppm.

3. Vitrage pare-flamme selon la revendication 1 ou 2, **caractérisé en ce que** l'élément vitré est constitué de deux plaques de verre de 10 mm trempées associées par un film de polyvinylbutyral.

4. Vitrage pare-flamme selon la revendication 3, **caractérisé en ce que** les chants des plaques de verre ont subi un poli fin **et en ce que** la contrainte de compression superficielle est supérieure à 12 000 hectopascals.

5. Vitrage pare-flamme selon la revendication 4, **caractérisé en ce que** la contrainte de compression superficielle est de 14 000 hectopascals.

6. Vitrage pare-flamme selon la revendication 1 ou 2, **caractérisé en ce** que l'élément vitré est constitué d'au moins trois plaques de verre individuelles d'une épaisseur d'au moins 3 mm chacune, disposées parallèlement l'une à l'autre et réunies en un vitrage feuilleté par des couches d'adhésif transparent en une matière thermoplastique, au moins les deux plaques de verre flotté extérieures du verre feuilleté ayant subi une trempe thermique.

7. Vitrage pare-flamme selon la revendication 1 ou l'une des revendications 3 à 6, lorsque celles-ci dépendent de la revendication 1, **caractérisé en ce que** le bord de l'élément vitré n'est recouvert par des parecloses que sur une hauteur qui ne dépasse pas 15 mm.

8. Vitrage pare-flame selon la revendication 1 ou l'une des revendications 3 à 7, lorsque celles-ci dépendent de la revendication 1, **caractérisé en ce que** le jeu total à froid entre l'élément vitré et le cadre dans la direction d'une dimension du vitrage est de l'ordre du centième de celle-ci.

9. Utilisation pour la réalisation d'un vitrage pare-flamme d'un verre silico-sodo-calcique flotté dont la composition est telle que sa transmission de l'énergie solaire selon la norme ISO 9050 est supérieure à 89 % en épaisseur 6 mm, la proportion pondérale d'oxyde ferreux dans la composition n'étant pas supérieure à 200 ppm de $Fe_2O_3$, et la proportion pondérale de l'ensemble des autres oxydes colorants étant inférieure à 100 ppm.

10. Procédé pour équiper un bâtiment d'un vitrage pare-flamme, **caractérisé en ce que** l'on fabrique un élément vitré à base d'un verre silico-sodo-calcique flotté dont la composition est telle que sa transmission de l'énergie solaire selon la norme ISO 9050 est supérieure à 89 % en épaisseur 6 mm, la proportion pondérale d'oxyde ferreux dans la composition n'étant pas supérieure à 200 ppm de $Fe_2O_3$, et la proportion de l'ensemble des autres oxydes colorants étant inférieure à 100 ppm, **et en ce que** l'on monte l'élément vitré dans la structure du bâtiment, éventuellement dans un cadre lié à cette structure, le jeu total à froid entre l'élément vitré et la structure ou le cadre lié à cette structure, dans la direction d'une dimension du vitrage, étant de l'ordre du centième de celle-ci.

## Claims

1. Flame-proof glazing comprising a glazed element based on soda-lime-silica float glass, installed in a frame or chassis, characterized in that the composition of the glass is such that its transmission of solar energy in accordance with ISO standard 9050 exceeds 89% in a 6 mm thickness, the ferrous oxide weight proportion in the composition not exceeding 200 ppm of $Fe_2O_3$ and the weight proportion of all the other colouring oxides being below 100 ppm.

2. Flame-proof glazing comprising a laminated glazed element constituted by the combination of soda-lime-silica float glass plates with the aid of at least one plastic intermediate film, characterized in that the composition of the glass of each of the plates is such that its transmission of solar energy in accordance with ISO standard 9050 exceeds 89% in a 6 mm thickness, the ferrous oxide weight proportion in the composition not exceeding 200 ppm of $Fe_2O_3$ and the proportion of all the other colouring oxides being below 100 ppm.

3. Flame-proof glazing according to claim 1 or 2, characterized in that the glazed element is constituted by two tempered 10 mm glass plates joined by a polyvinyl butyral film.

4. Flame-proof glazing according to claim 3, characterized in that the edges of the glass plates have undergone a fine polishing and in that the surface compressive stress exceeds 12000 hectopascals.

5. Flame-proof glazing according to claim 4, characterized in that the surface compressive stress is 14000 hectopascals.

6. Flame-proof glazing according to claim 1 or 2, characterized in that the glazed element is constituted by at least three individual glass plates having in each case a thickness of at least 3 mm, arranged parallel to one another and combined to form a laminated glazing by transparent adhesive layers of a thermoplastic material, at least the two outer float glass plates of the laminated glazing having undergone thermal tempering.

7. Flame-proof glazing according to claim 1 or one of the claims 3 to 6 when dependent on claim 1, characterized in that the edge of the glazed element is only covered by glazing beads over a height not exceeding 15 mm.

8. Flame-proof glazing according to claim 1 or one of the claims 3 to 7 when they are dependent on claim 1, characterized in that the total cold clearance between the glazed element and the frame in the direction of one dimension of the glazing is approximately 1/100 thereof.

9. Use for the production of a flame-proof glazing of a soda-lime-silica float glass, whose composition is such that its transmission of solar energy in accordance with ISO standard 9050 exceeds 89% in a 6 mm thickness, the ferrous oxide weight proportion in the composition not exceeding 200 ppm of $Fe_2O_3$ and the weight proportion of all the other colouring oxides being below 100 ppm.

10. Process for equipping a building with a flame-proof glazing, characterized in that production takes place of a glazed element based on soda-lime-silica float glass, whose composition is such that its transmission of solar energy in accordance with ISO standard 9050 exceeds 89% in a 6 mm thickness, the ferrous oxide weight proportion in the composition not exceeding 200 ppm of $Fe_2O_3$ and the proportion of all the other colouring oxides being below 100 ppm, and in that the glazed element is installed in the structure of the building, optionally in a frame linked with said structure, the total cold clearance between the glazed element and the structure or the frame linked with said structure, in the direction of one dimension of the glazing, being approximately 1:100 thereof.

**Patentansprüche**

1. Brandschutzverglasung, welche ein lichtdurchlässiges Element auf der Basis von Kalk-Natron-Silicat-Floatglas umfaßt, das in einem Rahmen oder einer Halterung befestigt ist, **dadurch gekennzeichnet, daß** die Zusammensetzung des Glases derart ist, daß sein Gesamtenergiedurchlaßgrad gemäß der Norm ISO 9050 bei einer Dicke von 6 mm mehr als 89 % beträgt, wobei der Gewichtsanteil an Eisenoxid in der Zusammensetzung 200 ppm $Fe_2O_3$ nicht übersteigt und der Gewichtsanteil aller anderen farbgebenden Oxide unter 100 ppm liegt.

2. Brandschutzverglasung, welche ein mehrschichtiges lichtdurchlässiges Element umfaßt, das durch Verbindung von Kalk-Natron-Silicat-Floatglasscheiben mittels mindestens einer Kunststoffzwischenfolie gebildet worden ist, **dadurch gekennzeichnet, daß** die Glaszusammensetzung jeder der Scheiben derart ist, daß ihr Gesamtenergiedurchlaßgrad gemäß der Norm ISO 9050 bei einer Dicke von 6 mm mehr als 89 % beträgt, wobei der Gewichtsanteil an Eisenoxid in der Zusammensetzung 200 ppm $Fe_2O_3$ nicht übersteigt und der Gewichtsanteil aller anderen farbgebenden Oxide unter 100 ppm liegt.

3. Brandschutzverglasung nach Anspruch 1 oder 2, **dadurch gekennzeichnet, daß** das lichtdurchlässige Element aus zwei vorgespannten 10 mm dicken Glasscheiben besteht, die durch eine Polyvinylbutyralfolie miteinander verbunden sind.

4. Brandschutzverglasung nach Anspruch 3, **dadurch gekennzeichnet, daß** die Kanten der Glasscheiben feinbeschliffen sind **und daß** die Oberflächendruckspannung mehr als 12 000 Hektopascal beträgt.

5. Brandschutzverglasung nach Anspruch 4, **dadurch gekennzeichnet, daß** die Oberflächendruckspannung 14 000 Hektopascal beträgt.

6. Brandschutzverglasung nach Anspruch 1 oder 2, **dadurch gekennzeichnet, daß** das lichtdurchlässige Element aus wenigstens drei einzelnen Glasscheiben gebildet ist, die jeweils mindestens 3 mm dick sind, zueinander parallel angeordnet und durch transparente Haftschichten aus einem Thermoplast zu einem Verbundglas vereinigt sind, wobei wenigstens die beiden äußeren Floatglasscheiben des Verbundglases thermisch vorgespannt wurden.

7. Brandschutzverglasung nach Anspruch 1 oder einem der Ansprüche 3 bis 6, wenn diese von Anspruch 1 abhängig sind, **dadurch gekennzeichnet, daß** das lichtdurchlässige Element nur bis zu einer Höhe, die 15 mm nicht überschreitet, von Abschlüssen bedeckt ist.

8. Brandschutzverglasung nach Anspruch 1 oder einem der Ansprüche 3 bis 7, wenn diese von Anspruch 1 abhängig sind, **dadurch gekennzeichnet, daß** das Gesamtspiel zwischen lichtdurchlässigem Element und Rahmen in der Kälte in Richtung einer Abmessung der Verglasung etwa ein Hundertstel von ihr beträgt.

9. Verwendung eines Kalk-Natron-Silicat-Floatglases, dessen Zusammensetzung derart ist, daß sein Gesamtenergiedurchlaßgrad gemäß der Norm ISO 9050 bei einer Dicke von 6 mm mehr als 89 % beträgt, wobei der Gewichtsanteil an Eisenoxid in der Zusammensetzung 200 ppm $Fe_2O_3$ nicht übersteigt und der Gewichtsanteil aller anderen farbgebenden Oxide unter 100 ppm liegt, zur Herstellung einer Brandschutzverglasung.

10. Verfahren zum Ausrüsten eines Gebäudes mit einer Brandschutzverglasung, **dadurch gekennzeichnet, daß** ein lichtdurchlässiges Element auf der Basis eines Kalk-Natron-Silicat-Floatglases, dessen Zusammensetzung derart ist, daß sein Gesamtenergiedurchlaßgrad gemäß der Norm ISO 9050 bei einer Dicke von 6 mm mehr als 89 % beträgt, wobei der Gewichtsanteil an Eisenoxid in der Zusammensetzung 200 ppm $Fe_2O_3$ nicht übersteigt und der Gewichtsanteil aller anderen farbgebenden Oxide unter 100 ppm liegt, hergestellt wird, **und daß** das lichtdurchlässige Element in der Gebäudestruktur, gegebenenfalls in einem mit dieser Struktur verbundenen Rahmen, befestigt wird, wobei das Gesamtspiel zwischen dem lichtdurchlässigen Element und der Struktur oder dem mit dieser Struktur verbundenen Rahmen in der Kälte in Richtung einer Abmessung der Verglasung etwa ein Hundertstel von ihr beträgt.

FIG_1

FIG_2